# EUROPEAN PATENT APPLICATION

(11) **EP 2 746 909 A2**
(43) Date of publication of application: **25.06.2014**
(21) Application number: 13198094.8
(22) Date of filing: 18.12.2013
(51) Int. Cl.: G06F 3/044

(54) **Capacitive touch module and touch display apparatus**

(30) Priority: 19.12.2012 CN 201210555540
(71) Applicant: Shanghai Tianma Micro-electronics Co., Ltd., Pudong New District Shanghai 201201 (CN)
(72) Inventor: Huang, Zhongshou, 201201 Shanghai (CN)
(74) Representative: Tischner, Oliver

(57) **Abstract**

The invention discloses a capacitive touch module and a touch display apparatus, where a first touch sensing electrode, a second touch sensing electrode connected to one touch sensing line are respectively disposed in two adjacent touch units, and a first touch driving electrode and a second touch driving electrode connected to one touch driving line are respectively disposed in two adjacent touch units, so that the touch sensing signal can respond to the change of the sensing capacitances in the two adjacent touch units, so as to reduce the high-frequency false signal possibility from the touch units, thereby lower the possibilities of an improper trigger and a mis-operation due to a jump and a sudden change at a touch point, thus making a touch event more smooth and fluid.

## Description

### Field of the Invention

The present invention relates generally to touch screen technologies, and more particularly to a capacitive touch module and a touch display apparatus.

### Background of the Invention

Touch screen has gradually become popular in our life with the rapid development of display technologies. At present the touch screens can be categorized by the operating principle as Resistive-type, Capacitive-type, Infrared-type, Surface Acoustic Wave type, Electromagnetic- type, Dispersive Signal Technology type, Frustrated Total Internal Reflection type, etc. Particularly the capacitive touch screen has gained recent attention in the industry due to its unique touch principle with high sensitivity, long life, high transmissivity and other advantages.

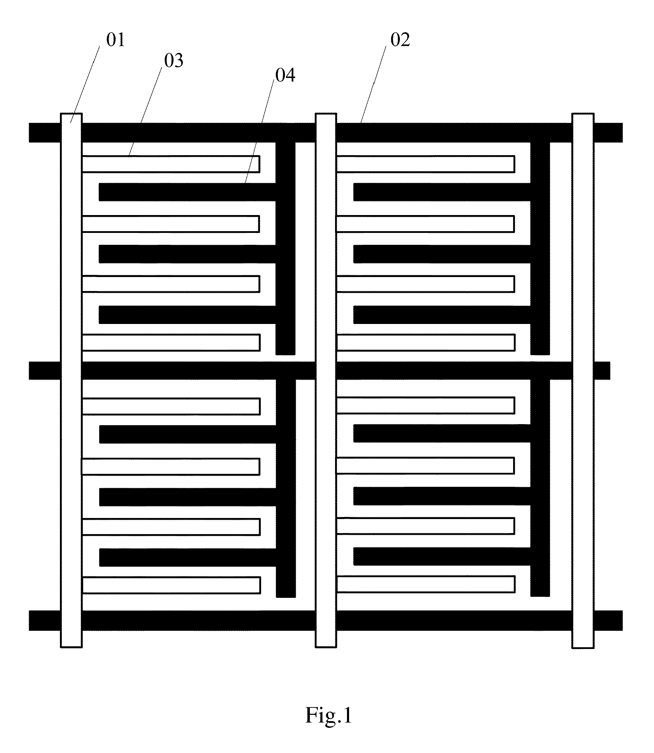

Fig.1 is a schematic diagram of electrodes distribution of a typical capacitive touch module. As shown, the capacitive touch module has a plurality of touch sensing lines 01 and a plurality of touch driving lines 02 that intersect each other and are electrically isolated from each other. A touch unit is formed by two adjacent touch sensing lines 01 and two adjacent touch driving lines 02. Fig.1 illustrates 2*2 touch units, each touch unit includes touch sensing electrodes 03 connected to a touch sensing line 01 and touch driving electrodes 04 connected to a touch driving line 02. In each touch unit, the touch sensing electrodes 03 and the touch driving electrodes 04 are arranged alternately, as illustrated in Fig.1.

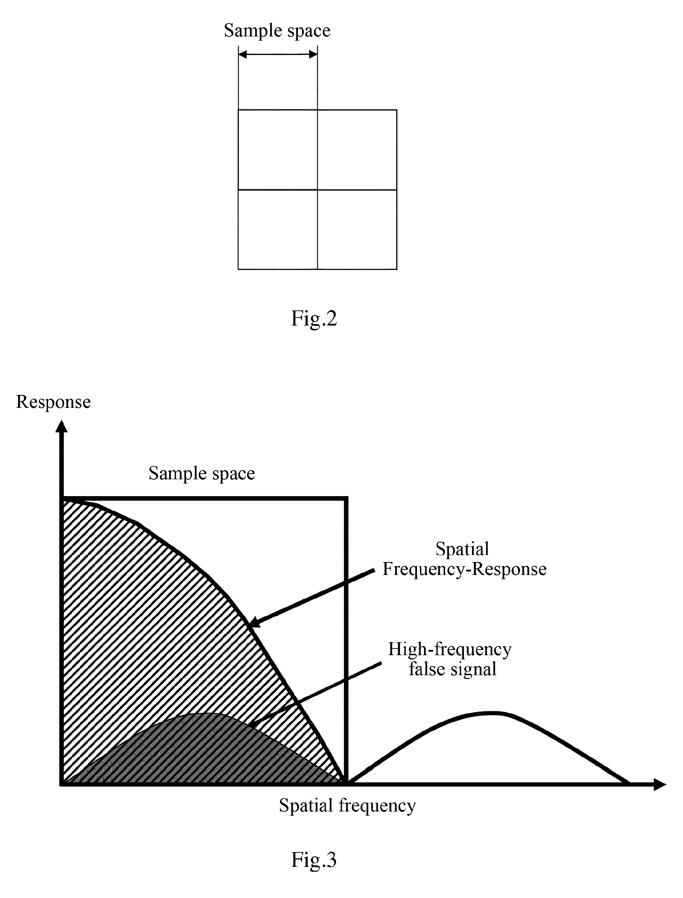

In the capacitive touch module illustrated in Fig.1, a touch unit represents a sample space, and Fig.2 illustrates a schematic diagram of the sample space in Fig.1, and as can be seen, since the touch driving electrodes 04 are connected to only one touch driving line 02, that is, the touch driving electrodes 04 connected to one touch driving line 02 are only distributed in one touch unit, and the touch sensing electrodes 03 are connected to only one touch sensing line 01, that is, the touch sensing electrodes 03 connected to only one touch sensing line 01 are only distributed in one touch unit, so that there is no spatially overlapping region between the respective touch units. As can be seen from a frequency - response curve illustrated in Fig.3, when a finger touches at a low touch density point on the touch screen, a high-frequency false signal may be generated by the touch units, and there may be a jump and sudden change at the touch point, thus resulting in an improper trigger and a mis-operation and lowering the accuracy of the touch screen.

### Summary of the Invention

Embodiments of the invention provide a capacitive touch module and a touch display apparatus so as to lower a high-frequency false signal generated at a touch unit to alleviate the problems of a jump and sudden change at a touch point and a consequential improper trigger and mis-operation of the capacitive touch module.

An embodiment of the invention provides a capacitive touch module comprising a plurality of touch driving lines and a plurality of touch sensing line intersecting each other and electrically isolated from each other, and a touch unit formed by two adjacent touch sensing lines and two adjacent touch driving lines. The touch unit includes a first touch sensing electrode electrically connected to a first adjacent touch sensing line and a first touch driving electrode electrically connected to a first adjacent touch driving line. The touch unit further includes: a second touch sensing electrode electrically connected to a second adjacent touch sensing line, the second touch sensing electrode is electrically isolated from the first touch sensing electrode; and/or a second touch driving electrode electrically connected with a second adjacent touch driving line, the second touch driving electrode is electrically isolated from the first touch driving electrode.

An embodiment of the invention provides a touch display apparatus including a display device and a touch module disposed on the display device, wherein the touch module is the capacitive touch module according to the embodiment of the invention.

Embodiments of the present invention provide many advantages and benefits.

In a capacitive touch module and a touch display apparatus according to the embodiments of the invention, in addition to a first touch sensing electrode electrically connected to an adjacent touch sensing line and a first touch driving electrode electrically connected to an adjacent touch driving line, each touch unit also includes a second touch sensing electrode electrically connected to the other adjacent touch sensing line, and/or a second touch driving electrode electrically connected to the other adjacent touch driving line. Thus, the first touch sensing electrode and the second touch sensing electrode both connected to one touch sensing line are located respectively in two adjacent touch units, and the first touch driving electrode and the second touch driving electrode both connected to one touch driving line are located respectively in two adjacent touch units, so that a touch sense signal can respond to the change of the sensing capacitances in the two adjacent touch units, so as to lower the high-frequency false signal from the touch units, thereby lower the possibilities of an improper trigger and a mis-operation due to a jump and a sudden change at a touch point, thus making a touch event more smooth and fluid.

### Brief Description of the Drawings

Fig.1 is a schematic diagram of electrodes distribution of a conventional capacitive touch module;
Fig.2 is a schematic diagram of a sample space of Fig.1;
Fig.3 is a frequency-response curve in a conventional touch unit;
Fig.4 is a schematic diagram of electrodes distribution of a capacitive touch module according to an embodiment of the invention;
Fig.5 is a schematic diagram of a sample space of Fig.4; and
Fig.6 is a frequency-response curve in each touch unit in the touch module according to the embodiment of the invention.
Fig.7 is a schematic diagram of the touch display apparatus according to the embodiments of the invention.

### Detailed Description of the Embodiments

Particular implementations of a capacitive touch module and a touch display apparatus according to embodiments of the invention will be detailed below with reference to the drawings.

In the drawings, the sizes and shapes of respective regions may not necessarily reflect a real scale of the capacitive touch module but are merely intended to illustrate the disclosure of the invention. It is understood that, when the claims use the word "or" in reference to a list of two or more items, that word covers all of the following interpretations of the word: any of the items in the list, all of the items in the list and any combination of the items in the list.

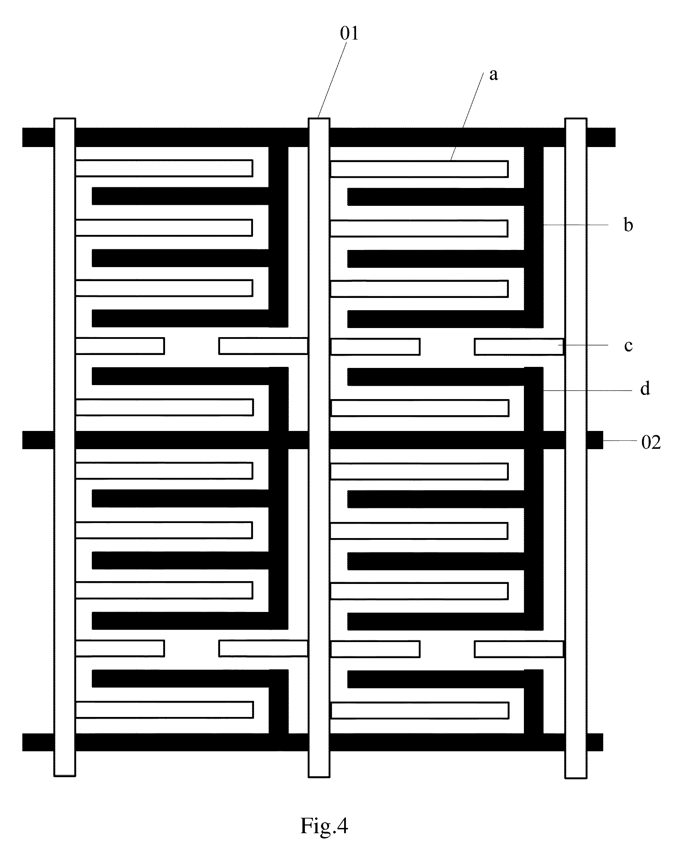

As illustrated in Fig.4, a capacitive touch module according to an embodiment of the invention includes a plurality of touch driving lines 02 and a plurality of touch sensing lines 01 that intersect each other and are electrically isolated from each other. The capacitive touch module also includes an array of touch units, each touch unit is formed by two adjacent touch sensing lines 01 and two adjacent touch driving lines 02. Each touch unit may include a plurality of first touch sensing electrodes "a" that is electrically connected to a first adjacent touch sensing line 01 and a plurality of first touch driving electrodes "b" that is electrically connected to a first adjacent touch driving line 02. Each touch unit further includes:

One or more second touch sensing electrodes "c" that are electrically connected to a second adjacent touch sensing line 01, the one or more second touch sensing electrodes "c" are electrically isolated from the first touch sensing electrodes "a"; and/or

One or more second touch driving electrodes "d" that are electrically connected to a second adjacent touch driving line 02, the one or more second touch driving electrodes "d" are electrically isolated from the first touch driving electrodes "b".

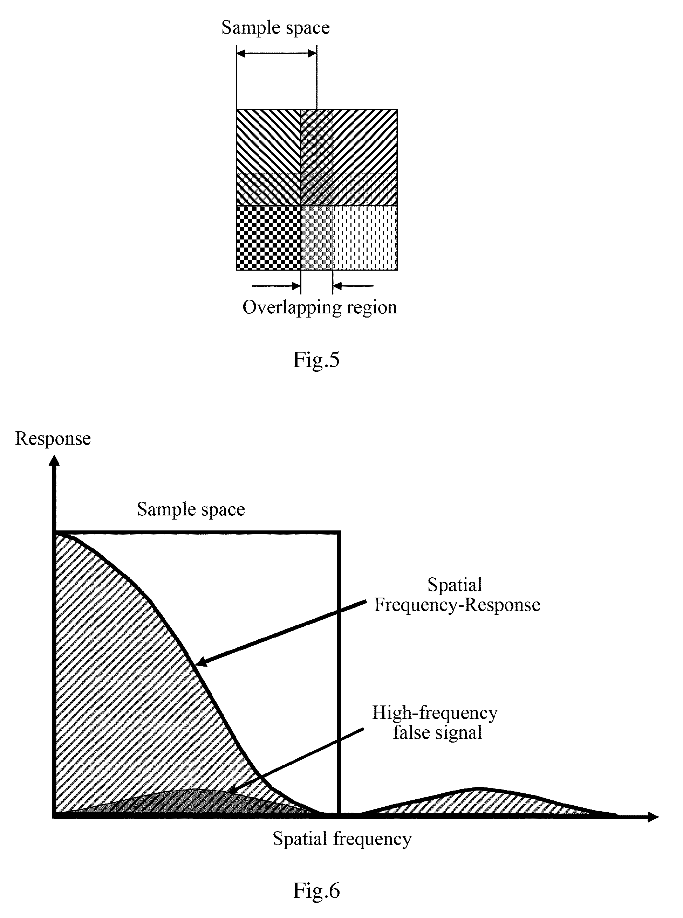

According to an embodiment of the present invention, in addition to first touch sensing electrodes "a" electrically connected to a first adjacent touch sensing line 01 and first touch driving electrodes "b" electrically connected to a first adjacent touch driving line 02, each touch unit further includes second touch sensing electrodes "c" that are electrically connected to a second adjacent touch sensing line 01 and/or second touch driving electrodes "d" that are electrically connected to a second adjacent touch driving line 02. Thus, the first touch sensing electrodes "a" and the second touch sensing electrodes "c" connected to one touch sensing line 01 are located respectively in two adjacent touch units, and the first touch driving electrodes "b" and the second touch driving electrodes "d" connected to one touch driving line 02 are located respectively in two adjacent touch units, so that a touch sense signal can respond to the change of the sensing capacitance in the two adjacent touch units. If a touch unit represents a sample space as illustrated in Fig.5, in the touch module according to an embodiment of the present invention, overlapping regions can be spatially considered as being present among the each touch units, and in the frequency-response curve as illustrated in Fig.6, the overlapping regions of the respective touch units can lower the high-frequency false signal probability from each touch unit, thereby lower an improper trigger and a mis-operation due to a jump and a sudden change at touch point, thus making a touch event more smooth and fluid.

In an embodiment of the invention, the touch module may only have the second touch sensing electrodes "c", that is, there are overlapping regions of each touch unit only in the horizontal direction. In another embodiment, the touch module may only have the second touch driving electrodes "d", that is, there are overlapping regions of each touch unit only in the vertical direction. In yet another embodiment, the touch module may have both the second touch sensing electrodes "c" and the second touch driving electrodes "d", that is, there are overlapping regions of each touch unit both in the horizontal direction and the vertical direction, dependent upon a practical need of the touch module, and the invention is not limited thereto.

In a particular implementation, the size of the overlapping regions of each touch unit in the vertical direction and in the horizontal direction can be adjusted according to the proportions of the areas of the first touch sensing electrodes "a" and the second touch sensing electrodes "c" in each touch unit and the proportions of the areas of the first touch driving electrodes "b" and the second touch driving electrodes "d" in each touch unit. Specifically in each touch unit, the ratio between the sum of the areas of each first touch sensing electrode and the sum of the areas of each second touch sensing electrode typically ranges from 3:1 1 to 20:1; and in each touch unit, the ratio between the sum of the areas of each first touch driving electrode and the sum of the areas of each second touch driving electrode typically ranges from 3:1 to 20:1.

In an embodiment, the first touch driving electrodes "b", the first touch sensing electrodes "a", the second touch driving electrodes "d" and the second touch sensing electrodes "c" in the touch units are arranged alternately, so that the first touch sensing electrodes "a" or the second touch sensing electrodes "c" are arranged around the first touch driving electrodes "b" or the second touch driving electrodes "d", and that the first touch driving electrodes "b" or the second touch driving electrodes are arranged around the first touch sensing electrodes "a" or the second touch sensing electrodes "c", that is, as illustrated in Fig.4, thus ensuring alternative arrangement of the touch driving electrodes (including the first touch driving electrodes "b" and the second touch driving electrodes "d") and the touch sensing electrodes (particularly the first touch sensing electrodes "a" and the second touch sensing electrodes "c") in each touch unit. It is understood that a particular implementation is not limited to the design illustrated in Fig.4, but the touch driving electrodes and the touch sensing electrodes can be designed as a strip-shape or a helical-shape or other shapes, and the invention is not limited thereto.

Specifically, for the first touch sensing electrodes "a", the second touch sensing electrodes "c", the first touch driving electrodes "b" and the second touch driving electrodes "d", at least one electrode is made of a transparent conductive material, and of course, all of them can be made of a transparent conductive material, and particularly the transparent conductive material can be indium tin oxide (ITO) or other materials, but the invention is not limited thereto.

Furthermore, in order to lower a jump and sudden change of the touch sensing signal in each touch unit, typically the width of a gap between the second touch sensing electrodes "c" and the second touch driving electrodes "d" is set to be the same with the width of a gap between the first touch driving electrodes "b" and the first touch sensing electrodes "a" to thereby ensure a relatively smooth touch sensing signal.

In an embodiment, the first touch sensing electrodes "a" and the second touch sensing electrodes "c" can be set as strip-shaped electrodes with an equal width while the first touch driving electrodes "b" and the second touch driving electrodes "d" can be set as strip-shaped electrodes with an equal width to obtain a relatively smooth touch sensing signal.

Based upon the same inventive concept with the above described touch module, an embodiment of the invention further provides a touch display apparatus, and since the touch display apparatus solves the problems under the similar principle to that of the foregoing capacitive touch module, reference can be made to the above-mentioned embodiments of the capacitive touch module for an implementation of the touch display apparatus, and a description thereof will not be repeated here.

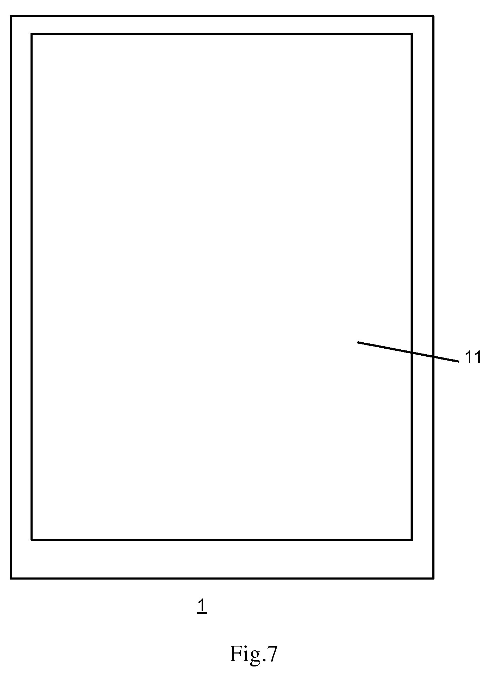

Specifically, as illustrated in Fig.7, an embodiment of the invention provides a touch display apparatus 1 including a display device (not shown in the drawing) and a touch module 11 disposed on the display device, where the touch module is the capacitive touch module according to the above-mentioned embodiments of the invention.

Particularly, the display device in the touch display apparatus according to embodiments of the invention can be a Liquid Crystal Display (LCD), Organic Light Emitting Diode (OLED) display, Plasmas Display Panel (PDP), Cathode Ray Tube (CRT) display or other display devices or can be other common display devices, but the invention will not be limited thereto.

In a capacitive touch module and a touch display apparatus according to the embodiments of the invention, in each touch unit, in addition to first touch sensing electrodes "a" electrically connected to one adjacent touch sensing line and first touch driving electrodes electrically connected to one adjacent touch driving line, there are also second touch sensing electrodes electrically connected to the other adjacent touch sensing line and/or second touch driving electrodes electrically connected to the other adjacent touch driving line. Thus the first touch sensing electrodes and the second touch sensing electrodes connected to one touch sensing line are located respectively in two adjacent touch units, and the first touch driving electrodes and the second touch driving electrodes connected to one touch driving line are located respectively in two adjacent touch units, so that a touch sensing signal can respond to the change of the sensing capacitances in the two adjacent touch units, so as to lower the high-frequency false signal probability from the touch units to thereby lower an improper trigger and a mis-operation due to a jump and a sudden change at touch point, thus making touch more smooth and fluid.

Evidently those skilled in the art can make various modifications and variations to the invention without departing from the scope of the invention. Thus the invention is also intended to encompass these modifications and variations thereto so long as the modifications and variations falls within the scope of the appended claims.

## Claims

1. A capacitive touch module, comprising :
a plurality of touch driving lines (02) and a plurality of touch sensing lines (01) intersecting each other and electrically isolated from each other; and
a touch unit formed by two adjacent touch sensing lines (01) and two adjacent touch driving lines (02);
wherein the touch unit comprises:
a first touch sensing electrode (a) electrically connected to a first adjacent touch sensing line (01) and a first touch driving electrode (b) electrically connected to a first adjacent touch driving line (02); wherein the touch unit further includes:
a second touch sensing electrode (c) electrically connected to a second adjacent touch sensing line (01), the second touch sensing electrode (c) being electrically isolated from the first touch sensing electrode (a); and/or
a second touch driving electrode (d) electrically connected to a second adjacent touch driving line (02), the second touch driving electrode (d) being electrically isolated from the first touch driving electrode (b).

2. The capacitive touch module according to claim 1, wherein in the touch unit, a ratio between an area of the first touch sensing electrode (a) and an area of the second touch sensing electrode (c) ranges from 3:1 to 20:1; and/or
a ratio between an area of the first touch driving electrode (b) and an area of the second touch driving electrode (d) ranges from 3:1 to 20:1.

3. The capacitive touch module according to claim 1 or 2, wherein the first touch driving electrode (b), the first touch sensing electrode (a), the second touch driving electrode (d) and the second touch sensing electrode (c) in the touch units are arranged alternately, so that the first touch sensing electrode (a) or the second touch sensing electrode (c) is arranged around the first touch driving electrode (b) or the second touch driving electrode (d), and the first touch driving electrode (b) or the second touch driving electrode (d) is arranged around the first touch sensing electrode (a) or the second touch sensing electrode (c).

4. The capacitive touch module according to claim 3, wherein at least one of the first touch sensing electrode (a), the second touch sensing electrode (c), the first touch driving electrode (b) and the second touch driving electrode (d) is made of a transparent conductive material.

5. The capacitive touch module according to claim 4, wherein a width of a gap between the second touch sensing electrode (c) and the second touch driving electrode (d) is the same as a width of a gap between the first touch driving electrode (b) and the first touch sensing electrode (a).

6. The capacitive touch module according to claim 5, wherein the first touch sensing electrode (a) and the second touch sensing electrode (c) are both strip-shaped electrodes with an equal width; and
the first touch driving electrode (b) and the second touch driving electrode (d) are both strip-shaped electrodes with an equal width.

7. A capacitive touch display apparatus (1), comprising a display device and a touch module (11) disposed on the display device, wherein the touch module comprises a capacitive touch module according to one of the preceding claims.

8. The capacitive touch display apparatus according to claim 7, wherein the display device comprises a Liquid Crystal Display (LCD), Organic Light Emitting Diode (OLED) display, Plasmas Display Panel (PDP) or Cathode Ray Tube (CRT) display device.
